# EUROPEAN PATENT APPLICATION

(11) **EP 2 611 194 A1**
(43) Date of publication of application: **03.07.2013**
(21) Application number: 12199481.8
(22) Date of filing: 27.12.2012
(51) Int. Cl.: H04N 21/418, H04N 21/458, H04N 21/81, H04N 21/45, H04N 21/485, H04N 21/426

(54) **Display Apparatus, Upgrading and Display System including the same**

(30) Priority: 28.12.2011 KR 20110144337
(71) Applicant: Samsung Electronics Co., Ltd., Suwon-si, Gyeonggi-do, 443-742 (KR)
(72) Inventor: Jung, Chang-joo, Hwaseong-si Gyeonggi-do (KR); Kim, Hyun-ho, Yangcheong-gu Seoul (KR)
(74) Representative: Brandon, Paul Laurence

(57) **Abstract**

A display apparatus, an upgrading apparatus and a display system including the same are provided. The display apparatus includes: a signal input unit to receive an input signal; a first image processor to output a first output signal by processing the input signal; an upgrading apparatus connector to which an upgrading apparatus comprising a second image processor is connectable; and a casing to accommodate the first image processor and the upgrading apparatus connector, the casing including a casing panel in which a connection opening is formed to enable access to the upgrading apparatus connector.

## Description

### CROSS-REFERENCE TO RELATED APPLICATION

This application claims priority from Korean Patent Application No. 10-2011-0144337, filed on December 28, 2011 in the Korean Intellectual Property Office, the disclosure of which is incorporated herein by reference.

### BACKGROUND

### Field

Apparatuses consistent with the exemplary embodiments relate to a display apparatus, an upgrading apparatus and a display system including the same, and more particularly, to a display apparatus, an upgrading apparatus and a display system including the same which enables a user to easily install the upgrading apparatus by connecting the upgrading apparatus to the display apparatus.

### Description of the Related Art

A display apparatus processes an image signal/image data transmitted by various external image supply sources or stored in the display apparatus. The display apparatus may process the processed image on a display panel thereof, and include a TV or a monitor. For example, a TV processes a broadcasting signal transmitted from an external source such as decoding and scaling processes and displays an image of a desired broadcasting channel on a display panel.

To perform the processes as above, the display apparatus has an image processing board built therein and includes various chipsets and memories.

As newer technologies are developed and user's demands become diverse, it has become more and more desirable for a display apparatus with the ability to extend its capabilities over the lifetime of the apparatus.

If a user should purchase a new display apparatus to use newly-added or complicated functions, it would cause financial burden to a user and may not ensure efficient resource utilization. Accordingly, there is a need for a display apparatus which is upgradable and may be added/extended with newer functionality.

### SUMMARY

Accordingly, aspects of one or more exemplary embodiments may be achieved by providing a display apparatus including: a signal input unit to receive an input signal; a first image processor to output a first output signal by processing the input signal; an upgrading apparatus connector to which an upgrading apparatus comprising a second image processor is connectable; and a casing to accommodate the first image processor and the upgrading apparatus connector, the casing including a casing panel in which a connection opening is formed to enable access to the upgrading apparatus connector.

The display apparatus may further include a connection opening cover which is detachably installed in the casing to close the connection opening if the upgrading apparatus is not connected to the upgrading apparatus connector.

The casing may include a front cover which covers the front side of the display apparatus and a rear cover which covers a rear side of the display apparatus, and the connection opening may be formed in the rear cover.

The connection opening cover may include at least one of an adhesive tape and plastic resin.

The display apparatus may further include a locking unit which is formed in at least one of the upgrading apparatus connector and the casing and locks the upgrading apparatus.

The locking unit may include a holder which is held and connected to the upgrading apparatus.

The display apparatus may further include a first controller which controls the first image processor to display an on screen display (OSD) on the display unit to notify connection or disconnection of the upgrading apparatus if the upgrading apparatus is connected to or disconnected from the upgrading apparatus connector.

The first controller may control the first image processor to process the input signal if the upgrading apparatus is not connected to the upgrading apparatus connector, and control the signal input unit and the first image processor to transmit at least one of the input signal and the first output signal to the upgrading apparatus connector if the upgrading apparatus is connected to the upgrading apparatus connector.

The display apparatus may further include an indication member which indicates whether the upgrading apparatus is connected to the upgrading apparatus connector.

Aspects of one or more exemplary embodiments may be achieved by providing an upgrading apparatus which is mounted to a display apparatus including a first image processor and a first controller, the upgrading apparatus including: a main body connector which is connected to the display apparatus; a second image processor which receives and processes at least one of a second input signal and a signal output by the display apparatus through the main body connector; a second controller which controls the second image processor; an upgrading apparatus main body which accommodates therein the main body connector, the second image processor and the second controller; and a locking unit which locks the upgrading apparatus main body to the display apparatus.

The locking unit may include a holder which is formed in at least one of the main body connector and the upgrading apparatus main body and holds and connects the upgrading apparatus to the display apparatus.

The upgrading apparatus main body may be provided to cover a connection opening through which an upgrading apparatus connector of the display apparatus is exposed to the outside.

Still another aspects of one or more exemplary embodiments may be achieved by providing a display system including: a display apparatus comprising: a signal input unit to receive an input signal, a first image processor to output a first output signal by processing the input signal, an upgrading apparatus connector to which an upgrading apparatus comprising a second image processor is connectable, and a casing to accommodate the first image processor and the upgrading apparatus connector, the casing including a casing panel in which a connection opening is formed to enable access to the upgrading apparatus connector; and
an upgrading apparatus comprising: a second image processor which processes a second input signal and outputs a second output signal, a second controller to control the second image processor, and a main body connector which detachably connects the upgrading apparatus to the upgrading apparatus connector of the display apparatus.

The display system may further include a connection opening cover which is detachably installed in the casing to cover the connection opening if the upgrading apparatus is not connected to the upgrading apparatus connector.

The display system may further include a locking unit which is provided in at least one of the upgrading apparatus and the display apparatus and locks the upgrading apparatus to the display apparatus.

The locking unit may include a holder which holds and connect the upgrading apparatus to the display apparatus.

The display apparatus may further include a first controller to control the first image processor, and at least one of the first and second controllers may control at least one of the first and second image processors to display on the display unit an on screen display (OSD) which notifies a connection/disconnection of the upgrading apparatus to/from the upgrading apparatus connector if the upgrading apparatus is connected to and disconnected from the upgrading apparatus connector.

The display system may further include an indication member which is provided in at least one of the display apparatus and the upgrading apparatus and indicates whether the upgrading apparatus is connected to the upgrading apparatus connector.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of a display system according to a first exemplary embodiment of the present invention;

FIG. 2 is a block diagram of a display system according to a second exemplary embodiment of the present invention;

FIG. 3A is a rear view of a display apparatus of the display system in FIG. 2;

FIG. 3B is a partly enlarged view of the area A in FIG. 3A;

FIG. 4 is an enlarged perspective view of a connector of an upgrading apparatus of the display apparatus in FIG. 3;

FIG. 5 is a perspective view of the upgrading apparatus of the display system in FIG. 2;

FIGS. 6A and 6B are lateral views for illustrating the upgrading apparatus before and after being connected to the display apparatus;

FIG. 7A is a rear perspective view of the upgrading apparatus to illustrates a locking process of the upgrading apparatus to the display apparatus in another manner; and

FIG. 7B is a sectional view taking along line B-B in FIG. 7A.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

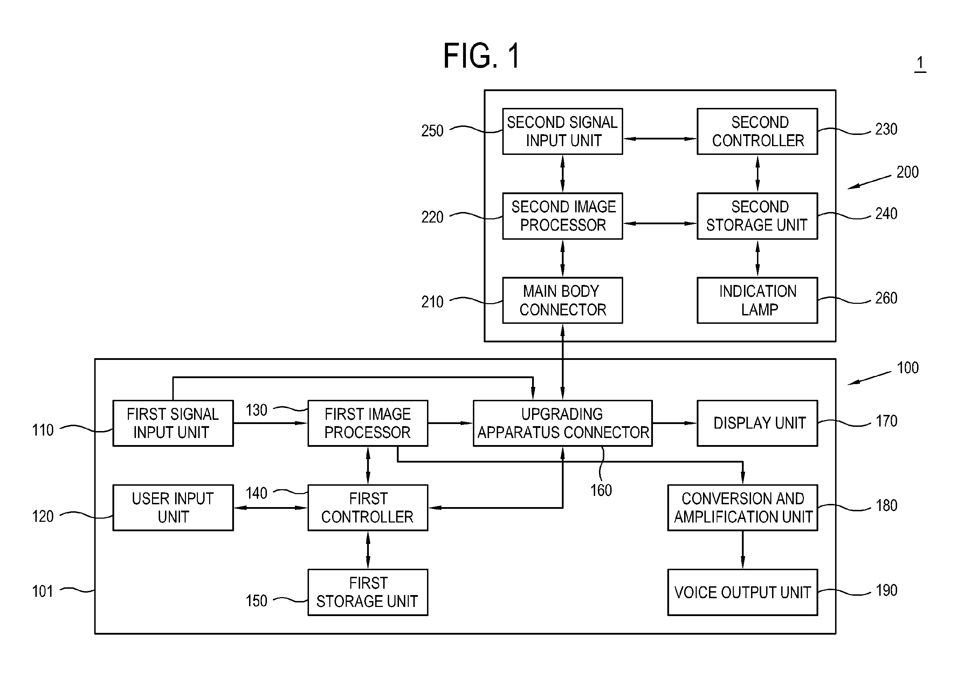

As shown in FIG. 1, a display system 1 according to a first exemplary embodiment of the present invention includes a display apparatus 100 which processes an image signal supplied by an external image supply source (not shown) according to a preset image processing operation and displays an image based on the processed image signal, and an upgrading apparatus 200 which upgrades hardware and/or software of the display apparatus 100.

The display apparatus 100 of the display system 1 according to the present exemplary embodiment includes a TV which displays a broadcasting image based on broadcasting signals/broadcasting information/broadcasting data transmitted by a transmission device of a broadcasting station. However, this is an example and the display apparatus 100 according to the present invention may be applied to other various devices which process and display an image, in addition to the TV. For example, the display apparatus 100 may include an image processing apparatus such as a set-top box which performs an image processing function alone without displaying images.

The display apparatus 100 may display other images as well as a broadcasting image. For example, the display apparatus 100 may display video, still images, applications and on-screen display (OSD) based on signals/data supplied by various image supply sources, and graphic user interface (GUI) for controlling various operations, but not limited thereto.

The upgrading apparatus 200 is connected to and communicates with the display apparatus 100. The upgrading apparatus 200 upgrades existing hardware/software of the connected display apparatus 100, and enables the display apparatus 100 to process an image signal with the upgraded hardware and/or software to thereby display an image with improved quality.

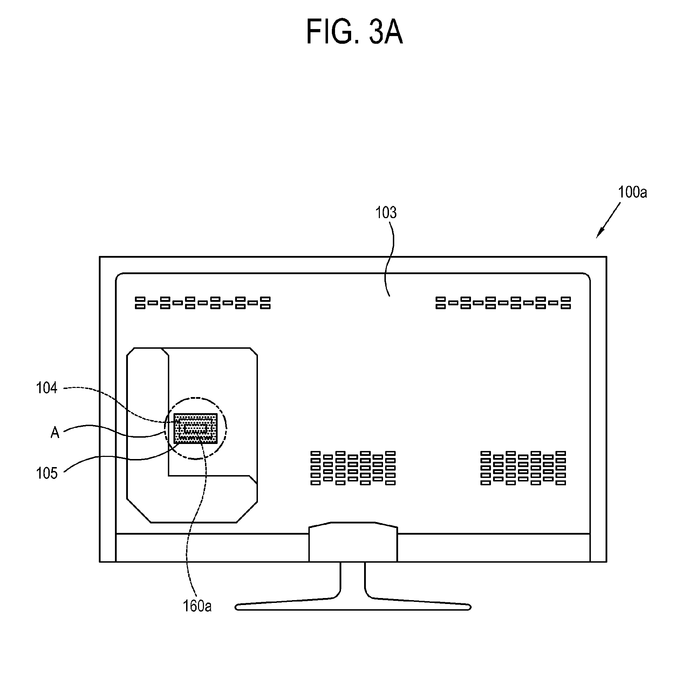

As shown in FIG. 1, the display apparatus 100 includes a first signal input unit 110 which receives an image signal from at least one image supply source (not shown); a first image processor 130 which processes an input signal input through the first signal input unit 110 and outputs a first output signal; an upgrading apparatus connector 160 to which the upgrading apparatus 200 including a second image processor 220 may be connected; a first controller 140 which controls the first image processor 130; a display unit 170 which displays at least one of a first image corresponding to the first output signal and a second image corresponding to a second output signal processed and output by the upgrading apparatus 200; and a casing (Fig. 3A) which accommodates therein the display unit 170.

The first signal input unit 110, the first image processor 130, the first controller 140 and the upgrading apparatus connector 160 may be provided in a single image processing board 101. However, this is an example, and the first signal input unit 110, the first image processor 130, the first controller 140 and the upgrading apparatus connector 160 may otherwise be arranged in a plurality of printed circuit boards (PCB) which is connected for communication. The image processing board 101 may be accommodated in the casing.

The first signal input unit 110 transmits an image signal and/or a broadcasting signal from at least one image supply source to the first image processor 130. The first signal input unit 110 may include a tuner to receive the broadcasting signal.

The standard of the image signal input through the first signal input unit 110 may vary depending on the image supply source and the screen embodiment type of the display unit 170. For example, the first signal input unit 110 may receive signals/data according to standards such as high definition multimedia interface (HDMI), universal serial bus (USB), and component, and may include a plurality of connection terminals (not shown) corresponding to such standards. As the connection terminals are connected to various external devices including the image supply source, the image signal is input through the first signal input unit 110.

If the upgrading apparatus 200 is connected to the upgrading apparatus connector 160, the first signal input unit 110 may transmit the input signal to the upgrading apparatus connector 160 rather than the first image processor 130 by a control signal of the controller 140. That is, the first signal input unit 110 may include a plurality of output ports to receive and output the input signal, and selectively transmit the input signal either to the upgrading apparatus connector 160 or the first image processor 130 by the control signal of the controller 140. The first signal input unit 110 may otherwise transmit the input signal only to the first image processor 130.

The first image processor 130 may include a demultiplexer (not shown) to divide a broadcasting signal transmitted by the first signal input unit 110 into an image signal, a voice signal and additional data, a decoder (not shown) to decode the divided image signal into a predetermined image format, and a scaler (not shown) to scale the decoded image signal into a predetermined resolution to display an image on the display unit 170 based on the image signal.

The first image processor 130 may perform various preset image processing operations with respect to an image signal transmitted by the first signal input unit 110. The first image processor 130 outputs the processed image signal to the display unit 160 to display an image on the display unit 170 based on the image signal.

The image processing operations of the first image processor 130 include, e.g., a demultiplexing operation to divide a predetermined signal into signals by characteristic, a decoding operation to decode corresponding to an image format of an image signal, a de-interlacing operation to convert an interlace image signal into a progressive image signal, a scaling operation to scale an image signal into a preset resolution, a noise reduction operation to improve an image quality, a detail enhancement operation, and a frame refresh rate conversion operation, but are not limited thereto.

To perform the foregoing operations, the first image processor 130 may include an image processing board (not shown) which is formed by a printed circuited board (not shown) in which various chipsets (not shown), memory (not shown), electronic parts (not shown) and wirings (not shown) are mounted.

The upgrading apparatus connector 160 is connected to a main body connector 210 of the upgrading apparatus 200 so that the display apparatus 100 and the upgrading apparatus 200 may communicate with each other for at least one of data, signals, information and/or power.

The upgrading apparatus connector 160 may include a predetermined number of ground terminals to stably transmit and receive at least one of data, signals, information, and/or power.

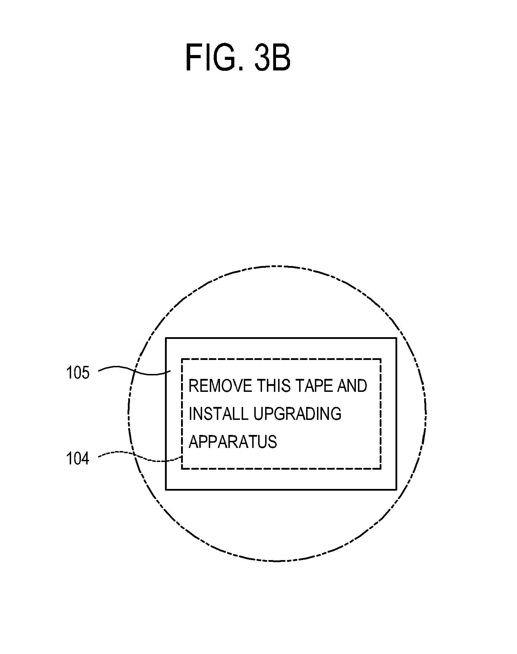

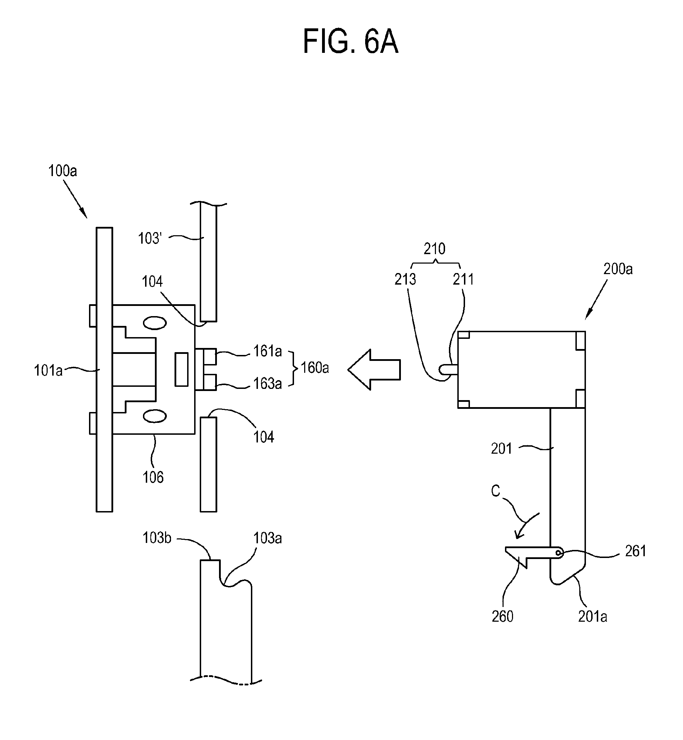

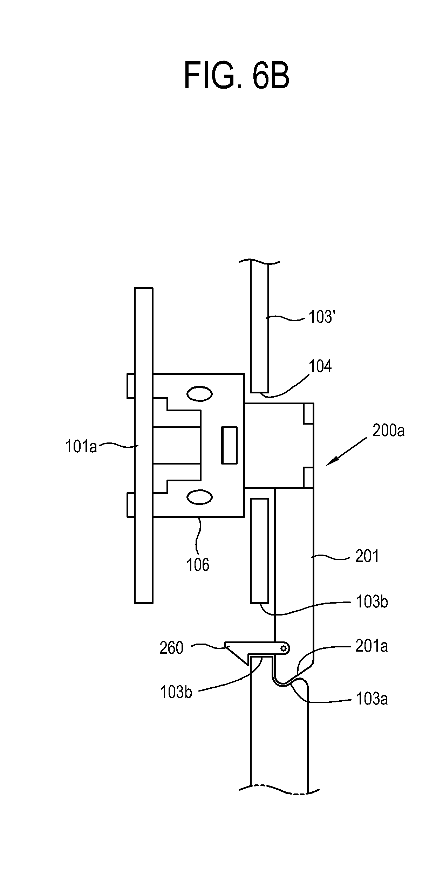

The upgrading apparatus connector 160 may be arranged in the casing to be exposed to the outside. That is, a connection opening (104 in Fig. 3A, Fig. 3B, Fig. 6A, and Fig. 6B) may be formed in the casing to expose the upgrading apparatus connector 160 to the outside. A user may insert the main body connector 210 of the upgrading apparatus 200 into the upgrading apparatus connector 160 through the connection opening to thereby connect the upgrading apparatus 200 to the display apparatus 100 for communication. Then, a user may easily install the upgrading apparatus 200 without separating the casing.

If the part exposing the screen of the display unit 170 is called a front side and the opposite part is called a rear side, the connection opening may be formed in the casing in the rear side. Then, the upgrading apparatus 200 may be installed in the rear side of the casing not to affect the overall look of the display apparatus 100.

If the upgrading apparatus 200 is not inserted into the upgrading apparatus connector 160, a connection opening cover (105 in Fig. 3A and Fig. 3B) may be detachably attached to the casing to close the connection opening. Then, impurities such as dust may be prevented from being introduced to the casing through the connection opening before the upgrading apparatus 200 is mounted.

The casing, the connection opening and the connection opening cover which are not shown in the first exemplary embodiment will be described in the second exemplary embodiment with reference to drawings.

The upgrading apparatus connector 160 may transmit at least one of the input signal input through the first signal input unit 110 and the first output signal output by the first image processor 130, to the main body connector 210.

The first output signal may include at least one of a first image signal and a first voice signal.

The upgrading apparatus connector 160 may include a connection port complying with general-purpose commercial standards such as HDMI, USB and component, and as applicable, may be provided according to a low voltage differential signaling (LVDS) standard for receiving and transmitting data/signals/information/power.

The upgrading apparatus connector 160 may vary in type and form as long as it enables communication between the display apparatus 100 and the upgrading apparatus 200 for at least one of data, signals, information and/or power.

If the upgrading apparatus 200 is not connected, the upgrading apparatus connector 160 transmits the first image signal output by the first image processor 130, to the display unit 170. If the upgrading apparatus 200 is not connected to the upgrading apparatus connector 160, a signal connection member (not shown) may be inserted into the upgrading apparatus connector 160 to transmit the first image signal output by the first image processor 130 to the display apparatus 170. The signal connection member only transmits signals and may be disconnected from the upgrading apparatus connector 160 if the upgrading apparatus 200 is connected to the upgrading apparatus connector 160.

The upgrading apparatus connector 160 may receive a second output signal processed by the second image processor 220, through the main body connector 210 of the upgrading apparatus 200, and transmit the received second output signal to the display apparatus 170.

If the upgrading apparatus 200 directly outputs the second output signal to the display unit 170, the first signal processor 130 may not receive the second output signal from the upgrading apparatus 200.

The upgrading apparatus connector 160 may be provided to enable communication between the first controller 140 and the second controller 230 of the upgrading apparatus 200 for control commands. That is, the upgrading apparatus connector 160 may include a connection port to transmit and receive the control commands.

If the upgrading apparatus 200 is not connected to the upgrading apparatus connector 160, the first controller 140 controls the first image processor 130 to process the input signal.

If the upgrading apparatus 200 is connected to the upgrading apparatus connector 160, the first controller 140 controls the signal input unit 110 and the first image processor 130 to transmit at least one of the input signal and the first output signal to the upgrading apparatus 200 through the upgrading apparatus connector 160 and to process the transmitted signal by the second image processor 220.

The first controller 140 may detect whether the upgrading apparatus 200 is connected through the upgrading apparatus connector 160.

If the second output signal processed by the upgrading apparatus 200 is transmitted to the upgrading apparatus connector 160 through the main body connector 210, the first controller 140 may control the upgrading apparatus connector 160 to transmit the second output signal to the display unit 170 (to be described later).

If the upgrading apparatus 200 is not connected to the upgrading apparatus connector 160, the display unit 170 displays thereon the first image corresponding to the first output signal output by the first image processor 130. If the upgrading apparatus 200 is connected to the upgrading apparatus connector 160, the display unit 170 displays thereon the second image corresponding to the second output signal output by the second image processor 220.

The display unit 170 may include a liquid crystal, plasma, light-emitting diode, organic light-emitting diode, surface-conduction electron-emitter, carbon nano-tube, or nano-crystal display, but is not limited thereto.

The display unit 170 may further include additional elements depending on its embodiment type. For example, if the display unit 170 includes a liquid crystal display, it may further include a liquid crystal display (LCD) panel (not shown), a backlight unit (not shown) emitting light to the LCD panel, and a panel driving substrate (not shown) driving the LCD panel.

The display apparatus 100 may further include a conversion and amplification unit 180 to convert into a predetermined format and amplify a voice signal divided by the first image processor 130; and a voice output unit 190 to output the amplified voice signal. The voice output unit 190 may include a speaker.

The display apparatus 100 may further include a user input unit 120 to output a preset command according to a user's manipulation; and a first storage unit 150 to store therein data/information of which type is not limited.

The user input unit 120 transmits various preset control commands or information to the first controller 140 by a user's manipulation and input. The user input unit 120 may include a menu key and input panel installed in an external side of the display apparatus 100, a remote controller which is separated from the display apparatus 100, etc.

The user input unit 120 may communicate with the display apparatus 100 by short distance wireless communication such as Bluetooth or infrared communication. In this case, the user input unit 120 may include a wireless keyboard and wireless mouse in addition to the remote controller.

The user input unit 140 may be integrally formed in the display unit 170 as applicable. That is, if the display unit 170 includes a touch screen, a user may transmit a preset command to the first controller 140 through an input menu (not shown) displayed on the display unit 170.

The first storage unit 150 stores data by control of the first controller 140. The first storage unit 150 may include a non-volatile memory such as a flash memory or a hard disc drive. The first storage unit 150 is accessed by the first controller 140, and the first controller 140 reads, records, modifies, deletes, and/or updates data with respect to the first storage unit 150.

For example, the first storage unit 150 may store therein an operating system to drive the display apparatus 100 and other various applications which may be executed in the operating system. The first storage unit 150 may also store image data, video data, etc.

The first controller 140 controls various elements of the display apparatus 100. For example, the first controller 140 may control the first image processor 130 to process an image, control the first signal input unit 110 to transmit and receive signals/information/data, and perform control operations corresponding to commands from the user input unit 120 to thereby control overall operations of the display apparatus 100.

The upgrading apparatus 200 may be connected to the display apparatus 100 through a wired connection, a wireless connection, over a network, etc. The upgrading apparatus 200 and the display apparatus 100 according to an exemplary embodiment may be connected to each other in a wired manner to transmit and receive data, information, signals, and/or power therebetween. As described above, the upgrading apparatus 200 may include the main body connector 210 to transmit and receive power and data to/from the display apparatus 100, and the display apparatus 100 may include the upgrading apparatus connector 160 to transmit and receive power and data to/from the upgrading apparatus 200. That is, the upgrading apparatus 200 may receive power necessary for driving from the display apparatus 100 through the main body connector 210. The upgrading apparatus 200 may further include a power converter to convert power supplied by the display apparatus 100 into power necessary for driving. If the display apparatus 100 converts all of power required by the upgrading apparatus 200 before transmission, the power converter may be omitted.

The upgrading apparatus 200 may receive additional external power (commercial power or battery) rather than directly receiving the driving power from the display apparatus 100 through the main body connector 210, as applicable.

Unlike in FIG. 1, the upgrading apparatus 200 may be connected to the display apparatus 100 in a wireless manner, in which case the upgrading apparatus 200 may receive driving power from an additional external power source or battery other than the display apparatus 100.

Before the upgrading apparatus 200 is connected, the display apparatus 100 independently processes an image signal transmitted from an external source according to a preset image processing operation and displays an image based on the processed image signal. If the upgrading apparatus 200 is connected to the display apparatus 100, the hardware/software of the display system 1 which performs the image processing operation are upgraded. Thus, new or better functions may be provided to a user by the upgrading apparatus 200. For example, as the upgrading apparatus 200 is connected to the display apparatus 100, an image with better quality than that provided by the display apparatus 100 alone may be provided.

The upgrading apparatus 200 includes the main body connector 210 which is connected to the display apparatus 100; a second image processor 220 which receives and processes a signal from the display apparatus 100; and a second controller 230 which controls the second image processor 220.

If the second image processor 220 is provided to be controlled only by the first controller 140 of the display apparatus 100, the second controller 230 may be omitted as applicable.

The second image processor 220 processes one of the input signal of the first signal input unit 110 output by the display apparatus 100 and the first output signal output by the first image processor 130 to output a second output signal.

The second output signal output by the second image processor 220 is transmitted to the display unit 170 through the main body connector 210 and the upgrading apparatus connector 160. Thus, a second image corresponding to the second output signal may be displayed on the display unit 170. As the second image processor 220 has enhanced functions of the first image processor 130 or performs functions which may not be performed by the first image processor 130, an upgraded image which may not be realized by the existing display apparatus 100 may be displayed on the display unit 170.

For example, while the first image processor 130 may not provide a full HD image, the second image processor 220 may provide a full HD image. Also, a 3D image which may not be provided by the first image processor 130 may be realized by the second image processor 220. These added or enhanced functions are an example and may vary.

The second image processor 220 may re-process the voice signal in addition to the image signal, and the re-processed and upgraded voice signal may be provided to the display apparatus 100.

The upgrading apparatus 200 may further include a second signal input unit 250 which receives a broadcasting signal or an image signal from an image supply source and transmits such broadcasting signal or image signal to the second image processor 220.

In the foregoing exemplary embodiment, the broadcasting signal or image signal is explained to be received or input by the first signal input unit 110 of the display apparatus 110. However, the upgrading apparatus 200 may include the second signal input unit 250 and receive the broadcasting signal or image signal separately from the display apparatus 110. In this case, if it is detected that the upgrading apparatus 200 is connected to the upgrading apparatus connector 160, the first controller 140 of the display apparatus 100 may suspend the operation of the first signal input unit 110 and the first image processor 130. An input signal (broadcasting signal or image signal) which is input through the second signal input unit 250 may be transmitted to and processed by the second image processor 220, and a second output signal which is output by the second image processor 220 may be transmitted to the display unit 170 through the upgrading apparatus connector 160 of the display apparatus 100. Thus, a second image corresponding to the second output signal may be displayed on the display unit 170.

If the upgrading apparatus 200 independently receives a broadcasting signal or an image signal through the second signal input unit 250, the first controller 140 may control the first image processor 130 to process an input signal input through the first signal input unit 110 and to output the first output signal to the display unit 170. A first image corresponding to the first output signal may be displayed as a main or sub screen on the display unit 170. Concurrently, if the broadcasting signal or image signal is input through the second signal input unit 250, the upgrading apparatus 200 may process the broadcasting signal or image signal through the second image processor 220 and transmit the second output signal to the display unit 170. Thus, a second image corresponding to the second output signal may be displayed as a sub or main screen on the display unit 170. That is, the first and second images which are formed by processing the first input signal input through the fist signal input unit 110 of the display apparatus 100 and the second input signal input through the second signal input unit 250 of the upgrading apparatus 200 may be displayed as a picture in picture (PIP) on the display unit 170.

If it is detected that the upgrading apparatus 200 is connected, the first controller 140 of the display apparatus 100 may jointly with the second controller 230 of the upgrading apparatus 200 control the first image processor 130 and the first signal input unit 110. For example, the first controller 140 may control part of the demultiplexer, the decoder and the scaler of the first image processor 130, and the second controller 230 may control the remaining elements.

Otherwise, the first controller 140 may control the first signal input unit 110 and the first image processor 130, and the second controller 230 may assist the first controller 140.

On the contrary, the second controller 230 may control the first signal input unit 110 and the first image processor 130, and the first controller 140 may assist the second controller 230.

If it is detected that the upgrading apparatus 200 is connected, the first controller 140 of the display apparatus 100 may fully transmit the control function of the first controller 140 to the second controller 230. In this case, the first controller 140 may not control the elements but transmit control commands of the second controller 230 to the elements which have been controlled by the first controller 140. Otherwise, there may be an exclusive control communication line to transmit and receive control commands between the second controller 230 and the elements controlled by the first controller 140.

The upgrading apparatus 200 may further include a second storage unit 240.

The second storage unit 240 may store data.

The second storage unit 240 may include a non-volatile memory such as a flash memory and a hard disc memory. The second storage unit 240 is accessed by the first controller 140 or the second controller 230, which reads, records, modifies, deletes, and/updates data stored in the second storage unit 240. The first storage unit 150 may be accessed by the second controller 230 as well as by the first controller 140 depending on its embodiment type.

The second storage unit 240 may store therein an operating system which has been upgraded from the operating system stored in the first storage unit 150. The first controller 140 or the second controller 230 may update the operating system stored in the first storage unit 150 to the upgraded operating system, and drive the updated operating system. The first controller 140 or the second controller 230 may drive the operating system stored in the second storage unit 240 rather than the operating system stored in the first storage unit 150.

The upgrading apparatus 200 may further include an indication member 260 such as a lamp or LED to indicate whether the upgrading apparatus 200 has been normally connected to the display apparatus 100 or whether the upgrading apparatus 200 normally operates.

The indication member 260 may be provided in the display apparatus 100 in addition to the upgrading apparatus 200. Otherwise, the indication member 260 may be provided only in the display apparatus 100.

The second controller 230 may control the power converter 270 to supply power from the upgrading apparatus connector 160 to the indication member 260. The indication member 260 may be connected to a power signal input terminal of the main body connector 210 without control of the second controller 230.

If the upgrading apparatus 200 is connected to the upgrading apparatus connector 160, the indication member 260 is turned on and enables a user to identify whether the upgrading apparatus 200 has been normally connected to the upgrading apparatus connector 160.

The second controller 230 may control the power converter 270 to supply different patterns of power to the indication member 260 depending on operation state of the upgrading apparatus 200 so that the indication member 260 may be indicated differently depending on such operation state. For example, if the indication member 260 includes red LED and blue LED and the upgrading apparatus 200 is in a normal state, the second controller 230 may control the power converter 270 to turn on the blue LED. If the upgrading apparatus 200 is in an abnormal state, the second controller 230 may control the power converter 270 to turn on the red LED.

The upgrading apparatus 200 may transmit an on screen display (OSD) image signal regarding the connection of the upgrading apparatus 200 to the upgrading apparatus connector 160 so that the fact that the upgrading apparatus 200 has been connected is displayed as an OSD of the display unit 170. Then, a user may recognize the normal connection of the upgrading apparatus 200 through the screen of the display unit 170.

If the upgrading apparatus 200 is connected to or disconnected from the upgrading apparatus connector 160, the first controller 140 of the display apparatus 100 may control the first image processor 130 to display an OSD on the display unit 170 to notify such connection or disconnection. The OSD image signal regarding the connection of the upgrading apparatus 200 may be formed by the second image processor 220 in addition to the first image processor 130, and a control operation for displaying the OSD image signal on the display unit 170 may be performed by the second controller 230 in addition to the first controller 140. That is, at least one of the first and second controllers 140 and 230 may control at least one of the first and second image processors 130 220 to display the OSD on the display unit 170 to notify such connection or disconnection.

Notification of connection or disconnection of the upgrading apparatus 200 may be output as a voice signal through the voice output unit 190.

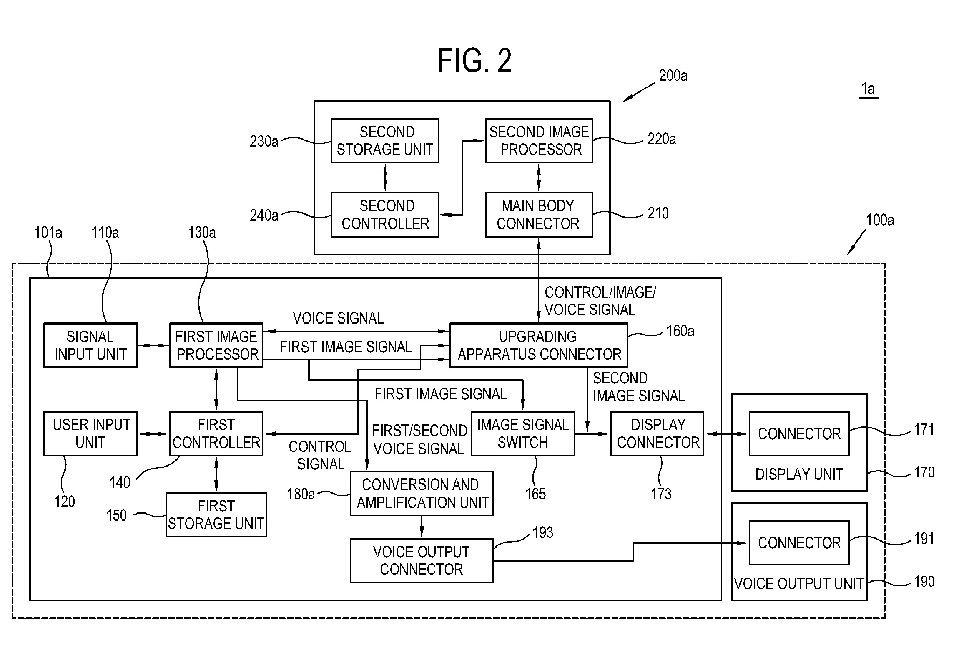

As shown in FIGS. 2 and 3A, a display system 1a according to a second exemplary embodiment of the present invention includes a display apparatus 100a and an upgrading apparatus 200a which may be connected to the display apparatus 100a. For reference, elements which are equivalent to those according to the first exemplary embodiment shall be given the same reference numerals and repetitive description will be avoided.

As shown in FIGS. 2, 3A and 4, the display apparatus 100a according to the second exemplary embodiment includes a signal input unit 110a which receives a broadcasting signal or an image signal from an image supply source (not shown) and selectively transmits the broadcasting signal or the image signal to a first image processor 130a or an upgrading apparatus connector 160a; the first image processor 130a which processes a broadcasting signal and/or image signal input by the signal input unit 110a and outputs the processed broadcasting signal and/or image signal as a first output signal; an image signal switch 165 which is used to selectively transmit the first image signal from the first image processor 130a to the display unit 170; an upgrading apparatus connector 160a which is used to transmit the first output signal and/or an input signal input through the signal input unit 110a to the upgrading apparatus 200a; a display unit 170 which displays thereon a first image corresponding to the first image signal; a first controller 140a which controls the first image processor 130a and a casing 103 which accommodates therein the display unit 170.

The first output signal which is output by the first image processor 130a is transmitted to both the upgrading apparatus connector 160a and the image signal switch 165.

The first output signal includes a first voice signal and a first image signal.

As described above, the first image processor 130a may include a demultiplexer (not shown) to divide a broadcasting signal transmitted by the signal input unit 110a into an image signal, a voice signal and additional data, a decoder (not shown) to decode the divided image signal into a predetermined image format, and a scaler (not shown) to scale the decoded image signal into a predetermined resolution to display an image on the display unit 170 based on the image signal.

The first image signal may include an image signal divided by the demultiplexer, an image signal decoded by the decoder or an image signal scaled into a predetermined resolution.

The first voice signal may include a voice signal divided by the demultiplexer.

As shown in FIGS. 3A and 6A, the casing 103 includes a connection opening 104 which is formed in a location corresponding to the location of the upgrading apparatus connector 160a to expose the upgrading apparatus connector 160a to the outside.

The casing 103 includes a casing panel 103' made of up, for example, a front cover (not shown) which covers a front side of the display unit 170 and a rear cover which covers a rear side of the display unit 170. Though the connection opening 104 is shown formed in the rear cover, the connection opening 104 may be formed anywhere in the casing panel 103' of the casing 103 that enables access to the upgrading apparatus connector 160 or 160a by the user.

As shown in FIGS. 3A and 3B, the display apparatus 100a may further include a connection opening cover 105 which is detachably attached to the casing 103 to close the connection opening 104 if the upgrading apparatus 200a is not connected to the upgrading apparatus connector 160a.

The connection opening cover 105 may include at least one of an adhesive tape and plastic resin.

As shown in FIG. 3B, wording on an external surface of the connection opening cover 105 may explain that the upgrading apparatus 200a may be connected by opening the connection opening cover 105 . FIG. 3B illustrates an adhesive tape used as the connection opening cover 105 (which may cover the connection opening 104), and a user may read the wording and remove the adhesive tape to connect the upgrading apparatus 200a.

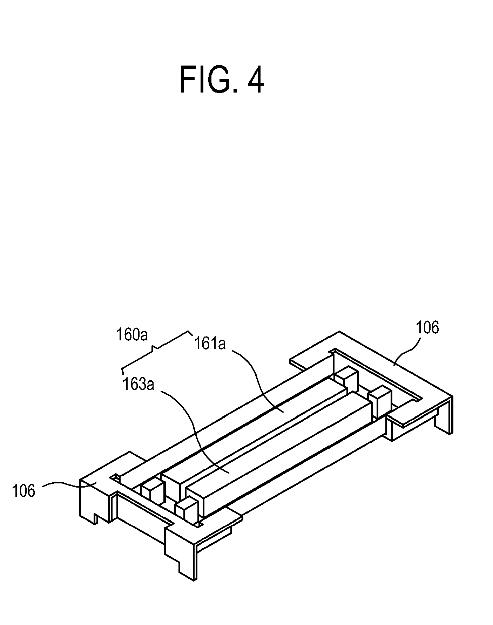

As shown in FIG. 4, the upgrading apparatus connector 160a includes a first input signal terminal 161a which receives a first output signal from the first image processor 130a; a display unit output terminal 163a which is spaced from the first input signal terminal 161a and outputs a signal to the display unit 170; and a supporting member 106 which supports the first input signal terminal 161a and the display unit output terminal 163a.

The supporting member 106 may be installed on the image processing board 101a.

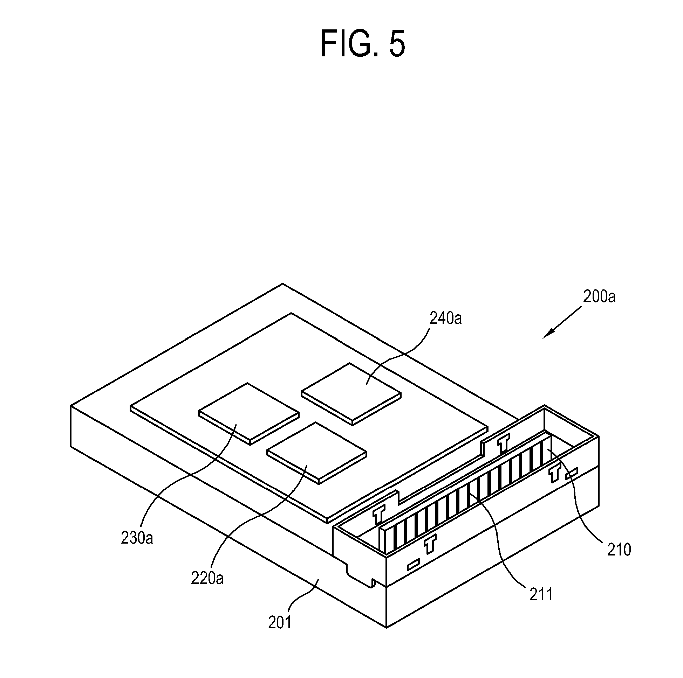

As shown in FIGS. 2 and 5, the upgrading apparatus 200a may further include a second image processor 220a which processes the first output signal input through the first input signal terminal 161a and the main body connector 210 and outputs a second output signal; a second controller 230a which controls the second image processor 220a; the second storage unit 240a; and an upgrading apparatus main body 201 which accommodates therein the second image processor 220a, the second controller 230a and the second storage unit 240a.

The upgrading apparatus main body 201 may cover the connection opening 104 which is formed to expose the upgrading apparatus connector 160a of the display apparatus 100a to the outside. That is, the upgrading apparatus main body 201 may have a predetermined size to cover the connection opening 104 so that the connection opening 104 is not shown from a rear side of the display apparatus 100a.

The second image processor 220a, the second controller 230a and the second storage unit 240a may be provided as a single chip, respectively or a part or all of the second image processor 220a, the second controller 230a and the second storage unit 240a may be provided as an integrated chip.

If the main body connector 210 of the upgrading apparatus 200a is inserted into the upgrading apparatus connector 160a, the input signal/first image signal/first voice signal are transmitted through the main body connector 210. The received signals are supplied to the second image processor 220a.

As shown in FIG. 5, the main body connector 210 includes a first signal input/output terminal 211 which contacts the first input signal terminal 161a of the upgrading apparatus connector 160a, and a second signal input/output terminal (not shown) which contacts the display unit output terminal 163a.

The second image processor 220a processes the input signal and/or the first image signal input through the first signal input/output terminal 211 of the main body connector 210 from the image processing apparatus 100a and outputs a second image signal to the display unit output terminal 163a through the second signal input/output terminal of the main body connector 210.

The second image signal which is output through the display unit output terminal 163a is transmitted to the display unit 170 by the display connector 173. Then, a second image corresponding to the second image signal is displayed on the display unit 170. The display unit 170 may include a connector 171 to be connected to the display connector 173. The connector 171 and the display connector 173 may include connectors, respectively, and may be connected to each other in a wired manner by a cable. Otherwise, the connector 171 and the display connector 173 may be connected to each other in a wireless manner.

The second image processor 220a may process the first voice signal input through the first signal input/output terminal 211 of the main body connector 210 from the display apparatus 100a and output a second voice signal to the first input signal terminal 161a of the upgrading apparatus connector 160a through the first signal input/output terminal 211 of the main body connector 210.

The output second voice signal may be transmitted to the conversion and amplification unit 180a via the first image processor 130a connected to the first input signal terminal 161a. The second voice signal may otherwise be transmitted directly to the conversion and amplification unit 180a from the upgrading apparatus connector 160a rather than via the first image processor 130a.

The second voice signal which is transmitted to the conversion and amplification unit 180a may be converted and amplified so that a voice corresponding to the second voice signal may be output through the voice output unit 190. The conversion and amplification unit 180a and the voice output unit 190 may be detachably connected to each other through the voice output connector 193 and the connector 191. The connector 191 may be provided in the voice output unit 190 and the voice output connector 193 may be installed in the image processing board 101. The connector 191 and the voice output connector 193 may include connectors, respectively and may be connected to each other in a wired manner by a cable. Otherwise, the connector 191 and the voice output connector 193 may be connected to each other in a wireless manner.

In the first exemplary embodiment, a signal connection member is inserted into the upgrading apparatus connector 160 before the upgrading apparatus 200 is connected to the upgrading apparatus connector 160. In the second exemplary embodiment, the signal connection member is not needed as a transmission route to transmit the first image signal to the display connector 173 and the image signal switch 165 installed in the transmission route are provided.

That is, until the upgrading apparatus 200a is connected, the first input signal terminal 161a of the upgrading apparatus connector 160a and the display unit output terminal 163a are not short-circuited and are open physically. Thus, the first output signal processed by the first image processor 130a and input to the first input signal terminal 161a is not output to the display unit 170 through the display unit output terminal 163a.

If the upgrading apparatus 200a is not connected to the upgrading apparatus connector 160a, the first controller 140a turns on the image signal switch 165 to transmit the first image signal to the display unit 170, and more specifically, to the display connector 173. Then, a first image corresponding to the first image signal is displayed on the display unit 170.

If it is detected that the upgrading apparatus 200a is connected to the upgrading apparatus connector 160a, the first controller 140a turns off the image signal switch 165 to stop transmitting the first image signal to the display unit 170. Then, the first image signal input to the upgrading apparatus connector 160a may be transmitted to the upgrading apparatus 200a through the main body connector 210 and processed by the second image processor 220a. The second image signal processed by the second image processor 220a is transmitted to the display unit 170 through the upgrading apparatus connector 160a. Then, a second image corresponding to the second image signal may be displayed on the display unit 170.

The image signal switch 165 may include switch suitable for an electrical signal system which may operate at high speed according to low voltage differential signaling (LVDS) standards. The image signal switch 165 may include a switch of a bus which may transmit data at high speed.

As shown in FIGS. 6A and 6B, the upgrading apparatus 200a may further include a locking unit to lock the upgrading apparatus 200a to the display apparatus 100a so that the upgrading apparatus 200a may be stably connected to the display apparatus 100a.

The locking unit may lock the upgrading apparatus 200a to the display apparatus 100a by at least one of holding/connection, connection by forcible fitting or connection by a coupler.

For example, the locking unit includes a first holder 260 to hold and connect the upgrading apparatus 200a to the display apparatus 100a; and a second holder 103b to which the holder 260 is held and connected. In FIGS. 6A and 6B, the first and second holders 260 and 103b are provided in the upgrading apparatus 200a and the display apparatus 100, respectively, but they may be provided vice versa.

The first holder 260 may be rotatably provided centering on a hinge shaft 261. The locking unit may further include an elastic member (not shown) which elastically biases the first holder 260 in a direction C. The elastic member may include a torsion coil spring.

The first holder 260 may have a held location in which the first holder 260 is held to the second holder 103b as shown in FIG. 6A, and a stopper (not shown) may be installed in the upgrading apparatus main body 201 to maintain the held location.

The upgrading apparatus main body 201 may include a stable seating unit 201a which is stably seated in an accommodator 103a of the casing 103 of the display apparatus 100a. The stable seating unit 201a may be shaped corresponding to the accommodator 103a. The accommodator 103a and the stable seating unit 201a may be coupled to each other by forcible fitting. Otherwise, the stable seating unit 201a and the accommodator 103a may be omitted.

Referring to FIGS. 6A and 6B, while the first holder 260 is directed to the second holder 103b as in FIG. 6A, the upgrading apparatus 200a is pressed to the upgrading apparatus connector 160a. Such pressure may be applied after the stable seating unit 201a of the upgrading apparatus main body 201 is stably seated in the accommodator 103a. Then, the first holder 260 moves beyond the second holder 103a and is locked to the second holder 103b so that the main body connector 210 of the upgrading apparatus 200a is inserted into the upgrading apparatus connector 160a.

The main body connector 210 includes a first signal input/output terminal 211 which contacts the first input signal terminal 161a of the upgrading apparatus connector 160a, and a second signal input/output terminal (213) which contacts the display unit output terminal 163a.

To remove the upgrading apparatus 200a from the upgrading apparatus connector 160a, the upgrading apparatus 200a is pulled backward with the accommodator 103a as a rotational center, and the first holder 260 goes beyond and is released from the second holder 103b, and the main body connector 210 may be released from the upgrading apparatus connector 160a.

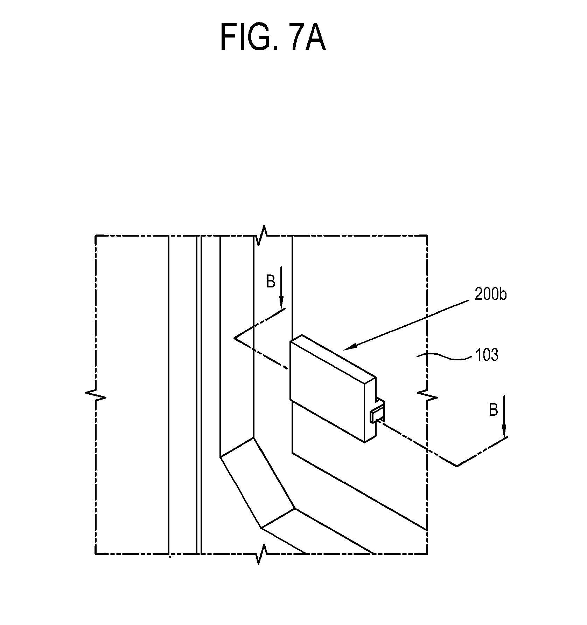

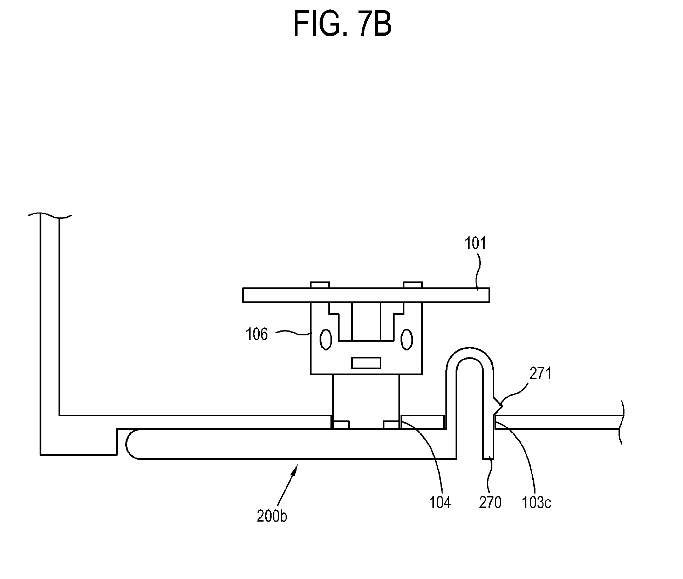

FIGS. 7A and 7B illustrate the upgrading apparatus 200b locked to the display apparatus 100a in another manner. FIG. 7A is a rear perspective view of the upgrading apparatus 200b to illustrates a locking process of the upgrading apparatus 200b to the display apparatus 100a in another manner. FIG. 7B is a sectional view taking along line B-B in FIG. 7A.

As shown in FIG. 7B, the locking unit include a third holder 270 including a projection 271, and a fourth holder 103c which may be held and connected to the third holder 270.

The third holder 270 may be provided in the upgrading apparatus 200b and the fourth holder 103c may be provided in the casing 103, and vice versa.

The projection 271 has a section that is substantially a triangle, and thus may be easily inserted and released. The shape of the section may vary including an elliptical shape, a semicircle shape, or the like as long as having an inclination.

The method of locking the upgrading apparatus 200b to the display apparatus 100a explained as above is an example and may vary.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A display apparatus comprising:
a signal input unit to receive an input signal;
a first image processor to output a first output signal by processing the input signal;
an upgrading apparatus connector to which an upgrading apparatus comprising a second image processor is connectable; and
a casing to accommodate the first image processor and the upgrading apparatus connector, the casing including a casing panel in which a connection opening is formed to enable access to the upgrading apparatus connector.

2. The display apparatus according to claim 1, wherein the upgrading apparatus connector is configured to selectively receive the input signal from the signal input unit and the first output signal from the first image processor signal.

3. The display apparatus according to claim 1, further comprising:
a first controller configured to receive a connection confirmation signal from the upgrading apparatus when the upgrading apparatus is connected to the upgrading apparatus connector, the connection confirmation signal indicating a connection state between the upgrading apparatus and the upgrading apparatus connector.

4. The display apparatus according to claim 3, wherein the first controller is further configured to control the first image processor to process the input signal, if the upgrading apparatus is not connected to the upgrading apparatus connector.

5. The display apparatus according to claim 3, wherein the first controller is further configured to control the signal input unit and the first image processor to transmit at least one of the input signal and the first output signal to the upgrading apparatus connector, if the upgrading apparatus is connected to the upgrading apparatus connector.

6. The display apparatus according to claim 3, further comprising:
an indication member to indicate whether the upgrading apparatus is connected to the upgrading apparatus connector.

7. The display apparatus according to claim 1, further comprising:
a connection opening cover which is detachably installed in the casing to close the connection opening.

8. The display apparatus according to claim 1, further comprising:
a locking unit to lock the upgrading apparatus to the casing in a connected state, the locking unit formed in at least one of the upgrading apparatus connector and the casing.

9. An upgrading apparatus comprising:
a main body connector which detachably connects to a display apparatus comprising a first image processor and a first controller;
a second image processor to process at least one of a second input signal received by the upgrading apparatus and a signal received from the display apparatus through the main body connector;
a second controller to control the second image processor;
an upgrading apparatus main body to accommodate the main body connector, the second image processor, and the second controller; and
a locking unit to lock the upgrading apparatus main body to the display apparatus.

10. The upgrading apparatus according to claim 9, wherein the locking unit comprises a holder to hold the upgrading apparatus to the display apparatus, and the holder is formed in at least one of the main body connector and the upgrading apparatus main body.

11. The upgrading apparatus according to claim 9, wherein the upgrading apparatus main body covers a connection opening through which access to an upgrading apparatus connector of the display apparatus is enabled.

12. A display system comprising:
a display apparatus comprising:
a signal input unit to receive an input signal,
a first image processor to output a first output signal by processing the input signal,
an upgrading apparatus connector to which an upgrading apparatus comprising a second image processor is connectable, and
a casing to accommodate the first image processor and the upgrading apparatus connector, the casing including a casing panel in which a connection opening is formed to enable access to the upgrading apparatus connector; and
an upgrading apparatus comprising:
a second image processor which processes a second input signal and outputs a second output signal,
a second controller to control the second image processor, and
a main body connector which detachably connects the upgrading apparatus to the upgrading apparatus connector of the display apparatus.

13. The display system according to claim 12, further comprising:
a locking unit to lock the upgrading apparatus to the display apparatus,
wherein the locking unit is provided in at least one of the display apparatus and the upgrading apparatus.

14. The display system according to claim 13, wherein the locking unit comprises a holder which holds the upgrading apparatus to the display apparatus.

15. The display system according to claim 12, further comprising:
an indication member to indicate whether the upgrading apparatus is connected to the upgrading apparatus connector,
wherein the indication member is provided in at least one of the display apparatus and the upgrading apparatus.
